# EUROPEAN PATENT APPLICATION

(11) **EP 0 788 936 A2**
(43) Date of publication of application: **13.08.1997**
(21) Application number: 96306189.0
(22) Date of filing: 27.08.1996
(51) Int. Cl.: B60R 21/20, B60R 21/26

(54) **Press-on inflator mount**

(30) Priority: 01.09.1995 US 522978; 04.12.1995 US 566886
(71) Applicant: MORTON INTERNATIONAL, INC., Chicago, Illinois 60606 (US)
(72) Inventor: Lang, Gregory J., South Ogden, Utah 84403 (US); Marjanski, George C., Riverdale, Utah 84405 (US)
(74) Representative: Bankes, Stephen Charles Digby

(57) **Abstract**

An inflator mount (10) for attachment to an inflator (80) having a cylindrical sidewall (82) and a peripheral inflator flange (84) radially extending from the sidewall, and for mounting the inflator within an airbag module (85). The inflator mount includes a generally flat annular bracket (12) having an inside edge (13) defining an opening (14) that accommodates passage of the radially extending peripheral inflator flange. An inflator flange grip (16) extends downwardly and inwardly from the inside edge of the annular bracket. The inflator flange grip slidingly receives and grippingly engages the inflator flange and embraces the underside thereof to thereby secure the inflator mount to the inflator. The inflator flange grip is variously provided as a cylindrical sleeve (18) frictionally gripping the inflator flange or a cylindrical sleeve with resilient snap tabs, inwardly extending dimples or discontinuous segments each having a continuous rib. A unitary module housing and inflator mount is also provided and includes a base plate that is unitary with the annular bracket (12). A housing sidewall extends upwardly from an outer edge of the base plate and defines an open top of the module housing. The unitary module housing and inflator mount also includes an inflator flange grip extending downwardly and inwardly from the inner edge of the annular bracket.

## Description

The present invention relates to an inflator mount for use with an airbag module. More particularly, the present invention relates to a press-on inflator mount that attaches to an inflator and is adapted to mount the inflator in a driver side airbag module.

Providing a separate easily attachable inflator mount that can be pressed onto an inflator, mount the inflator within an airbag module, and prevent inflator rotation with respect to the inflator mount would be useful. Providing an inflator mount that is unitary with a module housing of an airbag module would also be desirable. Inflators are used in airbag modules that are in turn used in inflatable restraint systems. Inflatable restraint systems are employed in automobiles for protecting an occupant against injury by physically restraining the occupant's body when the automobile encounters a collision.

The airbag module normally includes an inflator, a module housing and an airbag cushion. The module housing includes a base plate that supports the inflator and airbag cushion, and a housing sidewall that surrounds the folded airbag cushion. The inflator includes an inflator housing containing a gas generant material that, once triggered by a remote collision sensor, provides the inflation gas for inflating the airbag cushion. The inflator housing has a cylindrical sidewall forming a plurality of gas exhaust ports, and an integral peripheral bracket that extends radially outwardly from the sidewall below the gas exhaust ports. The base plate of the module housing has an inflator-receiving hole with a portion of the inflator extending therethrough. The airbag cushion has an open mouth formed by a collar that fits over the inflator with the collar positioned against the base plate so that the gas exhaust ports are located within the open mouth. The collar of the airbag cushion and the peripheral bracket of the inflator are secured to the base plate of the module housing, holding the airbag module together, and preventing the airbag cushion and inflator from becoming separated during inflation of the airbag cushion.

Providing an inflator mount in place of the peripheral bracket that is separate from, yet easily attachable to the inflator would save manufacturing time and reduce costs. Because the peripheral bracket is integral with the inflator housing on most existing inflators, the inflator housing is much more difficult and costly to fabricate. Using a stamping technique to manufacture the inflator, which is preferably from a cost standpoint, does not readily allow incorporating the peripheral bracket as an integral part of the inflator. Accordingly, providing an inflator housing that does not have an integral peripheral mounting bracket but has a separate, attachable, inflator mount that can be easily attached to the inflator prior to installing the inflator within the airbag module would be useful.

A separate inflator mount should attach to and mount an inflator so that the inflator will not become unattached from the airbag module during inflation of the airbag cushion. Forces which tend to pull the airbag module apart are produced during inflation of the airbag cushion, and the inflator mount should secure the inflator to withstand these forces. As with all components used in automobiles, the inflator mount should also mount the inflator in a squeak and rattle-free manner. If the inflator mount could be unitary with the module housing it would reduce the number of separate parts comprising the airbag module and simplify assembly of the airbag module.

One prior art inflator, shown and described in U.S. Patent 5,275,431, provides an inflator and a separate retainer member or inflator mount that is secured to the inflator using a radial crimping or forming method. The '431 inflator has an inflator flange and the inflator mount has an annular wall surface or cylindrical sleeve encircling the inflator and the inflator flange. A first flange or annular bracket, that attaches to the airbag module, extends outwardly from the sleeve and a second flange or support ring extends inwardly over the inflator flange. Once slid onto the inflator flange and the inflator, a crimped portion or flange clamp is formed in the sleeve using a radial crimping or forming method. The flange clamp clamps the inflator flange against the support ring securing the inflator mount to the inflator. The inflator mount on this inflator, therefore, requires an additional assembly step, crimping the sleeve, after being placed on the inflator.

It would be helpful, therefore, to provide an inflator mount that can be easily pressed onto an inflator and secured thereto without having to crimp the inflator mount or perform any other assembly steps thereafter. The inflator mount should lock onto the inflator, mount the inflator within an airbag module, and prevent inflator rotation with respect to the inflator mount. The inflator mount should also secure the inflator to the airbag module to withstand the expansive forces during inflation of the airbag, and provide shake and rattle-free mounting. It would also be useful to provide a unitary module housing and inflator mount.

### SUMMARY OF THE INVENTION

An object, therefore, of the present invention is to provide a separate inflator mount that is easily attached and secured to an inflator without requiring a further assembly step.

Another object of the present invention is to provide a separate inflator mount that secures an inflator to an airbag module and prevents rotation of the inflator with respect to the mount.

An additional object of the present invention is to provide a separate inflator mount that easily attaches to an inflator and secures the inflator within an airbag module to withstand the excessive forces created during inflation of the airbag cushion.

A further object of the present invention is to provide a separate inflator mount that provides shake and rattle-free mounting of an inflator.

Yet another object of the present invention is to provide an inflator mount that is unitary with a module housing of an airbag module.

In carrying out this invention, there is provided an inflator mount for attachment to an inflator having a cylindrical sidewall and a peripheral inflator flange radially extending from the sidewall, and for mounting the inflator within an airbag module. The inflator mount includes a generally flat annular bracket having an inside edge defining an opening that accommodates passage of the radially extending peripheral inflator flange. An inflator flange grip extends downwardly and inwardly from the inside edge of the annular bracket. The inflator flange grip slidingly receives and grippingly engages the inflator flange and embraces the underside thereof to secure the inflator mount to the inflator and adapt the inflator and inflator mount for mounting in an airbag module by means of the annular bracket.

According to one aspect of the present invention, the inflator flange grip comprises a cylindrical sleeve and a lower support ring. The sleeve extends downwardly from the annular bracket and frictionally and grippingly engages the outer periphery of the inflator flange, and the lower support ring extends inwardly from the cylindrical sleeve and embraces at least a portion of the underside of the flange.

According to another aspect of the present invention, the inflator flange grip further includes a flange clamp adapted to extend over at least a portion of the inflator flange and clamp the inflator flange against the support ring. According to an additional aspect of the present invention, the flange clamp comprises a plurality of spaced-apart, resilient, snap tabs extending inwardly from the sleeve. The tabs are adapted to resiliently bend outward to slide over the flange, and once over the flange, resiliently bend inward to clamp the flange against the support ring. According to a further aspect of the present invention, the flange clamp comprises a plurality of spaced-apart dimples extending inwardly from the sleeve and which are received over the inflator flange. According to still another aspect of the present invention, the cylindrical sleeve and support ring comprise at least two discontinuous segments. Each sleeve segment has a continuous radial rib extending inwardly to comprise the flange clamp.

According to still yet another aspect of the present invention, a unitary module housing and inflator mount is provided and includes a housing base plate having a unitary annular bracket with an inner edge defining an opening accommodating passage of the inflator flange. A housing sidewall extends upwardly from an outer edge of the housing base plate and defines an open top of the module housing. The unitary module housing and inflator further includes an inflator flange grip extending downwardly from the inner edge of the annular bracket. The inflator flange grip slidingly receives and grippingly engages the inflator flange and embraces the underside thereof to secure the unitary module housing and inflator mount to the inflator for mounting in an airbag module.

The present invention, therefore, provides an inflator mount that can be easily pressed onto an inflator and secured thereto without having to crimp the inflator mount or perform any further assembly steps. The present invention also provides the inflator mount for mounting in or unitary with a module housing.

The invention together with further objects, features, advantages and aspects thereof, will be more clearly understood from the following description taken in connection with the accompanying drawings.

### BRIEF DESCRIPTION OF THE DRAWINGS

FIG. **1** is a side elevation view, partially in section, of a inflator mount according to the present invention attached to an inflator and mounted within an airbag module;
FIG. **2** is a top elevation view of a unitary module housing and inflator mount according to the present invention;
FIG. **3** is a sectional view of the unitary module housing and inflator mount taken along the line **3** - **3** of FIG. **2**;
FIG. **4** is a side elevation view, partially in section, of another inflator mount according to the present invention attached to an inflator;
FIG. **5** is a perspective view of the inflator mount of FIG. **4**;
FIG. **6** is an enlarged sectional view of a portion of the inflator mount of FIGS. **4** and **5**;
FIG. **7** is a side elevation view, in section, of another unitary module housing and inflator mount according to the present invention;
FIG. **8** is a side elevation view, partially in section, of an additional inflator mount according to the present invention attached to an inflator;
FIG. **9** is an enlarged sectional view of a portion of the inflator mount of FIG. **8**;
FIG. **10** is a side elevation view, in section, of an additional unitary module housing and inflator mount according to the present invention;
FIG. **11** is a side elevation view, partially in section, of a further inflator mount according to the present invention attached to an inflator;
FIG. **12** is a perspective view of the inflator mount of FIG. **11**; and
FIG. **13** is a side elevation view, in section, of a further unitary module housing and inflator mount according to the present invention.
The same reference numerals refer to the same elements throughout the various figures.

### DETAILED DESCRIPTION OF THE INVENTION

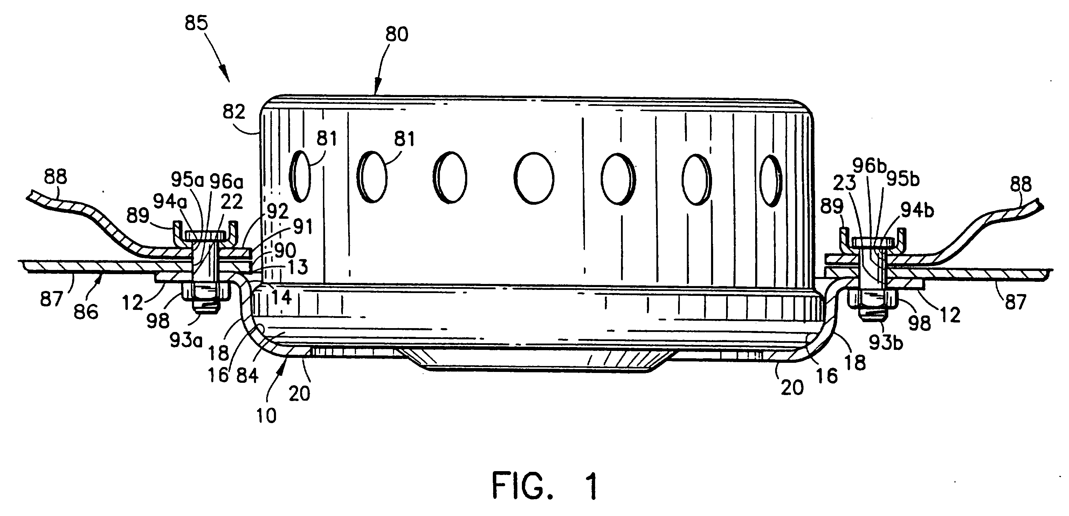

Referring first to FIG. **1**, the present invention is directed to an inflator mount **10** for attachment to an inflator **80** having a cylindrical sidewall **82** and a peripheral inflator flange **84** radially extending from the sidewall **82**. The inflator mount is adapted to mount the inflator **80** within an airbag module **85**.

The inflator mount **10** includes a continuous, generally flat, annular bracket **12** having an inside edge **13** defining an opening **14** accommodating passage of the radially extending peripheral inflator flange **84**. An inflator flange grip **16** extends downwardly and inwardly from the inside edge **13** of the annular bracket **12**. The flange grip **16** slidingly receives and grippingly engages the inflator flange **84** and embraces the underside thereof to secure the inflator mount **10** to the inflator **80** and adapt the inflator and inflator mount **10** for mounting in an airbag module **85** by means of the annular bracket **12**.

The flange grip **16** comprises a continuous cylindrical sleeve **18** and a continuous lower support ring **20**, although both could be provided in discontinuous segments. The sleeve **18** extends downwardly from the annular bracket **12** and frictionally and grippingly engages the outer periphery of the inflator flange **84**. The lower support ring **20** extends inwardly from the cylindrical sleeve **18** and conforms to and embraces at least a portion of the underside of the flange **84.**

The inflator mount **10** is made of spring steel or another suitable material and is a one-piece stamped member. During assembly, the inflator mount **10** is pressed onto the inflator **80**. The cylindrical sleeve **18** of the inflator mount **10** is of slightly smaller diameter than the inflator flange **84** and as the sleeve **18** slides over the flange **84** it resiliently deforms outwardly to accept the flange **84**. The resilient deformation causes the sleeve **18** to radially clamp and frictionally engage the flange **84** to secure the inflator mount **10** to the inflator **80** and prevent inflator rotation with respect to the inflator mount **10**. Once attached to the inflator **80**, the inflator mount **10** is ready to be secured in an airbag module **85**.

FIG. **1** also shows the inflator mount **10** and inflator **80** secured in a driver side airbag module **85**. The airbag module **85** includes an airbag cushion **88,** an airbag retainer **89** and a module housing **86** having a base plate **87**. The cylindrical sidewall **82** of the inflator **80** includes a plurality of gas exhaust ports **81** and contains a gas generant material that, once triggered by a remote collision sensor (not shown), provides the inflation gas for inflating the airbag cushion **88**. The annular bracket **12** of the inflator mount **10** is positioned against the base plate **87** so that a portion of the sidewall **82** containing the gas exhaust ports **81** extends through an inflator receiving hole **90** in the base plate **87**. The airbag cushion **88** has an open mouth **91** formed by a collar **92** that fits over the inflator **80** with the collar **92** positioned against the base plate **87** so that the gas exhaust ports **81** are located within the open mouth **91**. The airbag retainer **89** is positioned over the collar **92** of the airbag cushion **88** and the retainer **89**, collar **92** and annular bracket **12** are secured to the base plate **87** with fasteners **93a,93b**. The fasteners **93a,93b** pass through, respectively, receiving holes **94a,94b** in the retainer **89**, receiving holes **95a,95b** in the collar **92**, receiving holes **96a,96b** in the base plate **87** and receiving holes **22,23** in the annular bracket **12,** and are secured with nuts **98,99** or the like. During inflation of the airbag cushion **88,** inflation forces tend to push the inflator **80** downward and the support ring **20** holds the inflator **80** within the airbag module **85**.

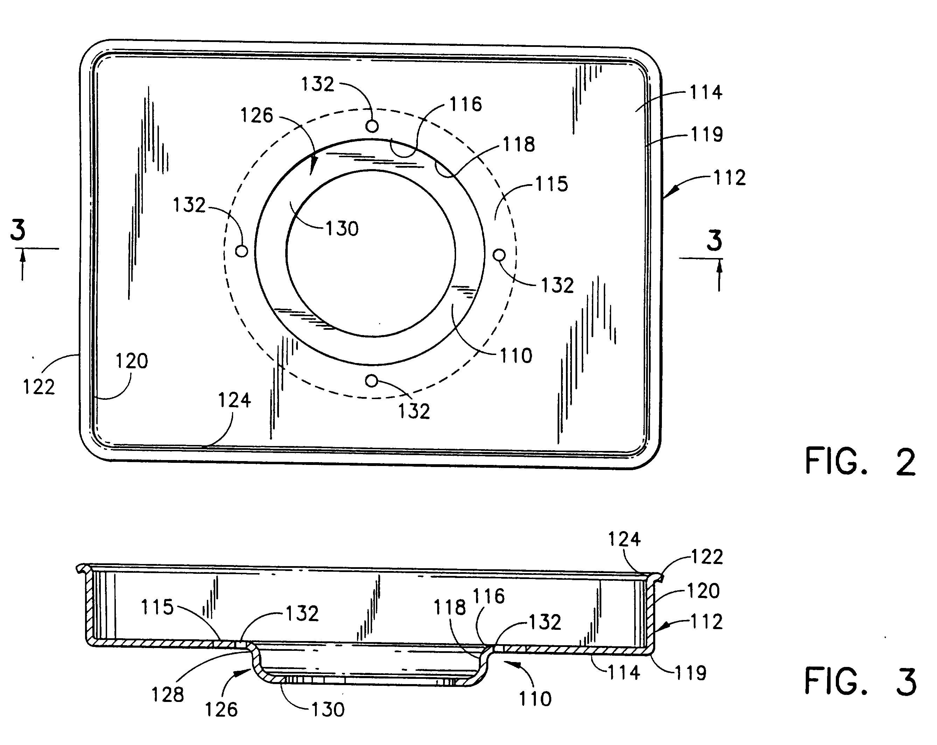

Referring to FIGS. **2** and **3**, an inflator mount **110** similar to the inflator mount **10** of FIG. **1** is shown unitary with a module housing **112** according to the present invention. The module housing **112** has a base plate **114** which includes as a unitary construction an annular bracket **115** of the inflator mount **110**. The dotted line is provided to indicate a transition between the base plate **114** and the annular bracket **115** of module housing **112**, although it will be appreciated they are a unitary one-piece structure. An inner edge **116** of annular bracket **115** defines an opening **118** accommodating passage of the inflator flange, and a housing sidewall **120** extends upwardly from an outer edge **119** of the base plate **114**. The housing sidewall **120** ends in a curled lip **122** defining an open top **124** of the module housing **112**. The unitary module housing **112** and inflator mount **110** further includes an inflator flange grip **126** extending downwardly and inwardly from the inner edge **116** of the annular bracket **115**. The inflator flange grip **126** comprises a continuous cylindrical sleeve **128** and a lower support ring **130**.

As shown in FIG. **2**, the base plate **114** and housing sidewall **120** are generally rectangular, but other shapes are suitable. The annular bracket **115** defines fastener receiving holes **132** for mounting an airbag cushion (not shown but similar to the airbag cushion **88** of FIG. **1**). The housing sidewall **120** is adapted to surround the airbag cushion, which is folded within the module housing **112** prior to inflation. The curled lip **122** of the housing sidewall **120** is normally adapted to catch the edges of an airbag module cover (not shown) to close the open top of the module housing **112**.

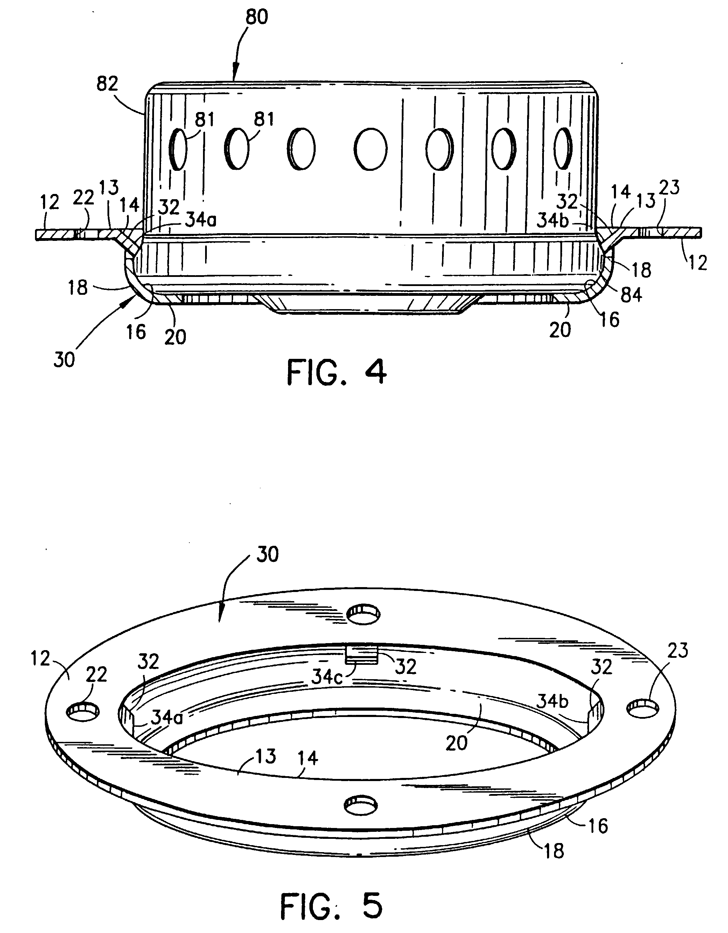

Referring to FIGS. **4** through **6**, another inflator mount **30** according to the present invention is shown. The inflator mount **30** has an annular bracket **12**, having an inner edge **13,** opening **14** and fastener receiving holes **22,23,24,25,** and an inflator flange grip **16** comprising a cylindrical sleeve **18** and a support ring **20**. In addition, the inflator mount **30** includes a flange clamp **32** adapted to extend over at least a portion of the inflator flange **84** and clamp the inflator flange **84** against the support ring **20**. The flange clamp **32** comprises four spaced-apart, resilient, snap tabs **34a,34b,34c** (the fourth snap tab is not shown, but is similar to and positioned opposite snap tab **34c**) that extend inwardly from the cylindrical sleeve **18** and are resiliently deformable. The tabs **34a,34b,34c** resiliently bend to slide over the inflator flange **84** as the flange **84** is inserted through opening **14** and, once over the flange **84**, resilient bend back to extend inwardly over the flange **84** to clamp the flange **84** against the support ring **20**.

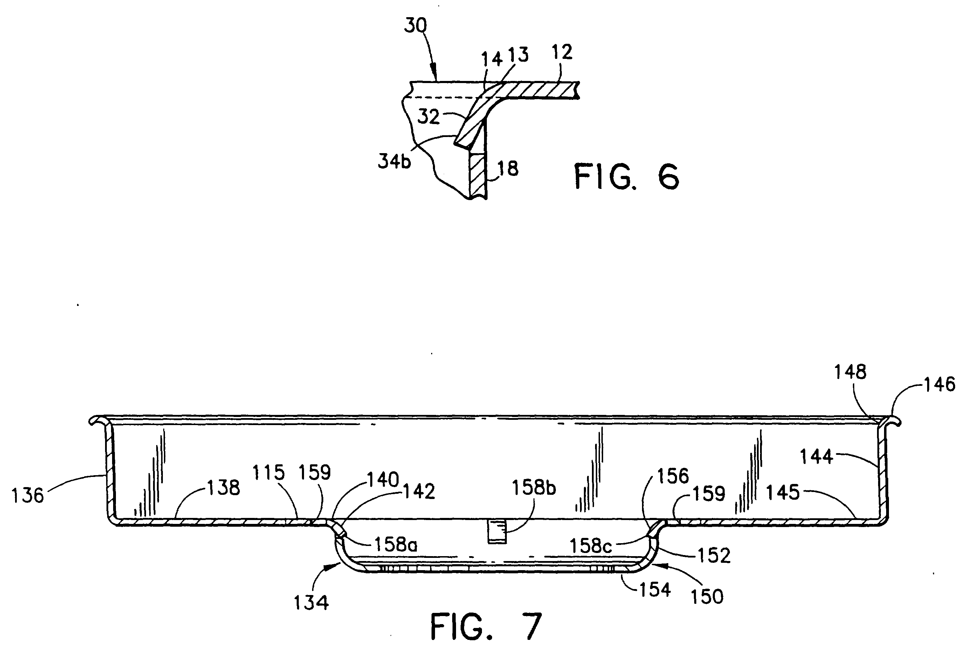

Referring to FIG. **7**, an inflator mount **134** similar to the inflator mount **30** of FIGS. **4 - 6** is shown unitary with a module housing **136** according to the present invention. The unitary module housing **136** and inflator mount **134** includes a base plate **138** having a unitary annular bracket **139** with an inner edge **140** defining an opening **142** accommodating passage of an inflator flange. A housing sidewall **144** extends upwardly from an outer edge **145** of the base plate **138** and ends in a curled lip **146** defining an open top **148** of the module housing **136**. The unitary module housing **136** and inflator mount **134** further includes an inflator flange grip **150** extending downwardly and inwardly from the inner edge **140** of the annular bracket **139**. The inflator flange grip **150** comprises a continuous cylindrical sleeve **152** and a lower support ring **154**. In addition, the inflator mount **134** includes a flange clamp **156** comprising four spaced-apart, resilient, snap tabs **158a,158b,158c** that extend inwardly from the cylindrical sleeve **152** and are resiliently deformable (the fourth snap tab is not shown but is similar to and opposite from snap tab **158b)**. Fastener receiving holes **159** for mounting an airbag cushion are provided in the annular bracket **139**.

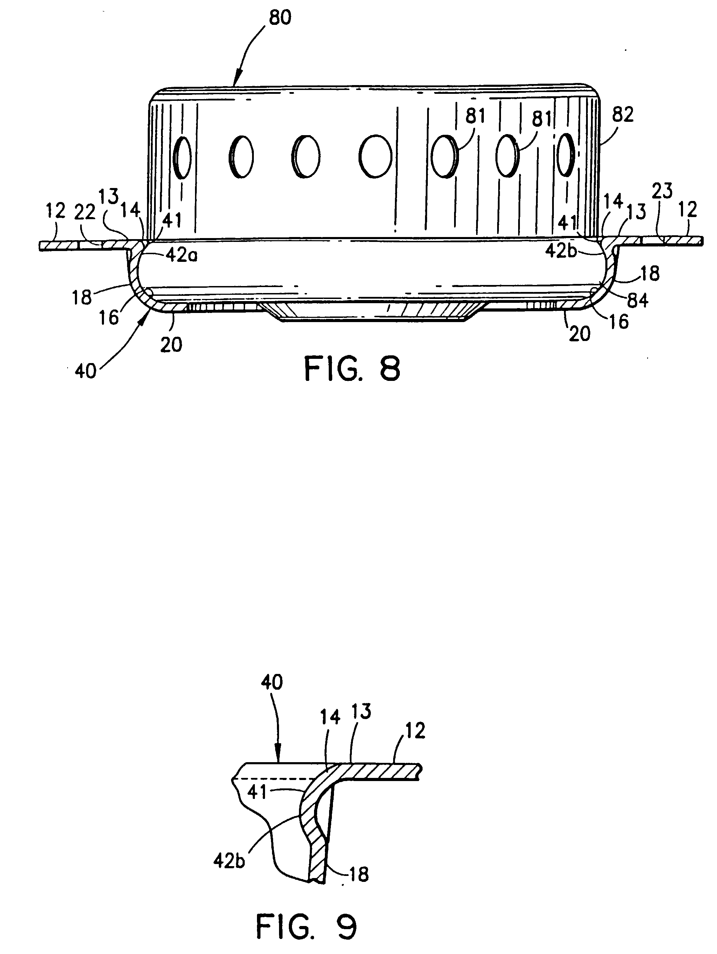

Referring to FIGS. **8** and **9**, an additional inflator mount **40** according to the present invention is shown. The inflator mount **40** has an annular bracket **12** and an inflator flange grip **16** comprising a cylindrical sleeve **18** and a support ring **20**. In addition, the inflator mount **40** includes a flange clamp **41** that comprises four spaced-apart dimples **42a,42b** (the two other dimples are not shown but are similar to dimples **42a,42b**) extending inwardly from the cylindrical sleeve **18**. The sleeve **18** elastically deforms to allow the inflator mount **40** to be pressed onto the inflator **80**, with the dimples **42a,42b** sliding over the inflator flange **84**. Once past the flange **84**, the dimples **42a,42b** extend over the flange **84** to clamp the flange **84** against the support ring **20** and further secure the inflator mount **40** to the inflator **80**.

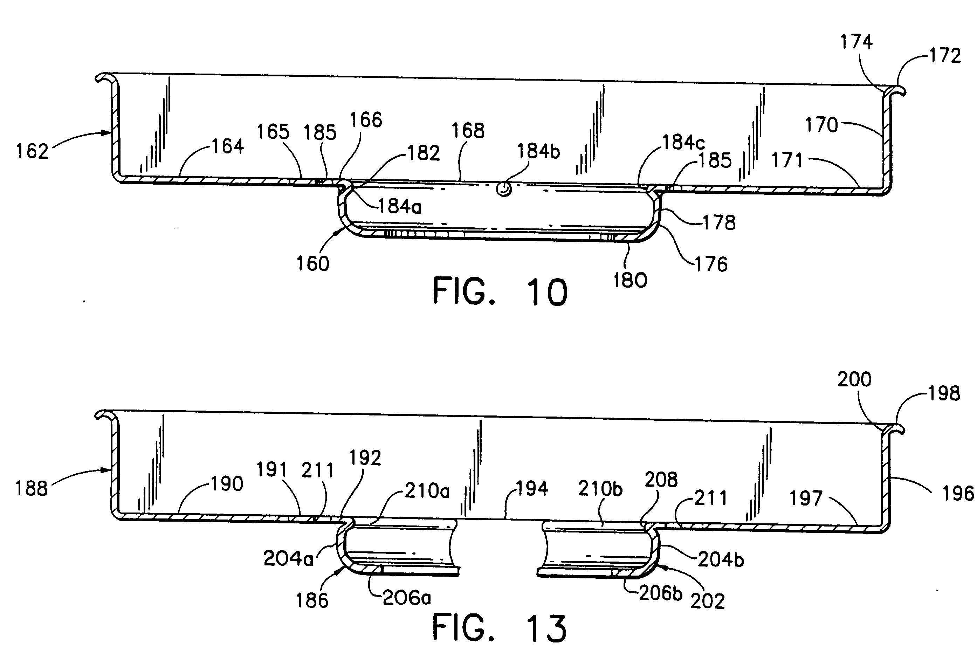

Referring to FIG. **10**, an inflator mount **160** similar to the inflator mount **40** of FIGS. **8** and **9** is shown unitary with a module housing **162** according to the present invention. The unitary module housing **162** and inflator mount **160** includes a base plate **164** having a unitary annular bracket **165** with an inner edge **166** defining an opening **168** accommodating passage of an inflator flange. A housing sidewall **170** extends upwardly from an outer edge **171** of the base plate **164** and ends in a curled lip **172** defining an open top **174** of the module housing **162**. The unitary module housing **162** and inflator mount **160** haves an inflator flange grip **176** extending downwardly and inwardly from the inner edge **166** of the annular bracket **165**. The inflator flange grip **176** comprises a continuous cylindrical sleeve **178** and a lower support ring **180**. In addition, the inflator mount **160** includes a flange clamp **182** comprising four spaced-apart dimples **184a,184b,184c** that extend inwardly from the cylindrical sleeve **178** (the fourth dimple is not shown but is similar to and opposite from dimple **184b**). Fastener receiving holes **185** for mounting an airbag cushion are provided in the annular bracket **165**.

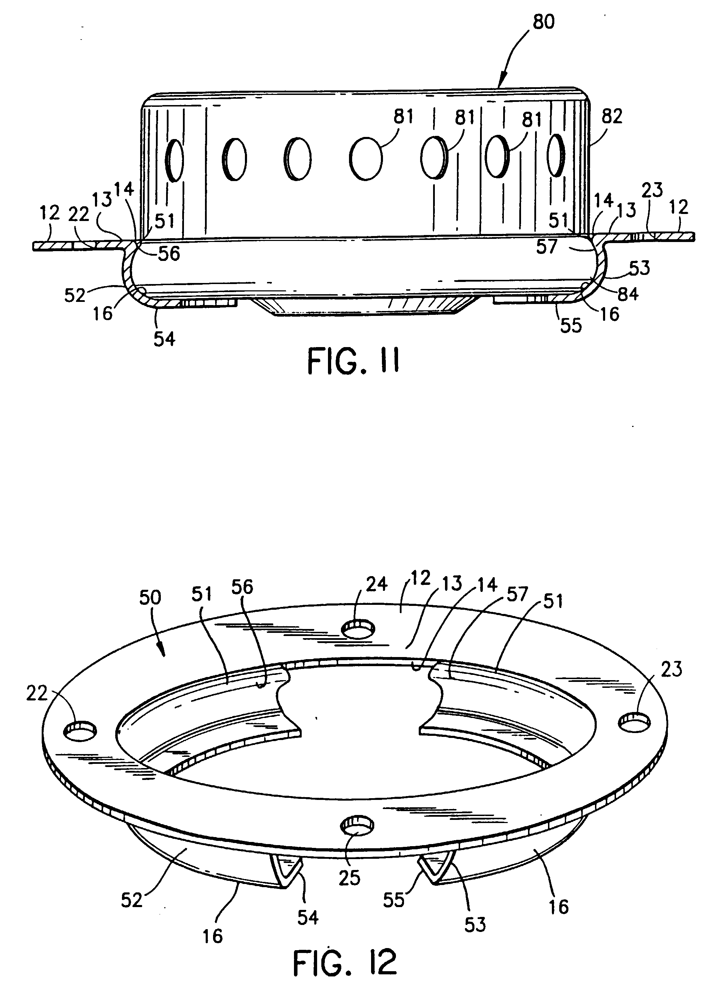

Referring to FIGS. **11** and **12**, a further inflator mount **50** according to the present invention is shown. The inflator mount **50** has an annular bracket **12** and an inflator flange grip **16** comprising a cylindrical sleeve **52,53** a support ring **54,55** and a flange clamp **51**. The cylindrical sleeve **52,53** and support ring **54,55** each comprise two discontinuous segments and each sleeve segment **52,53** has a continuous radial rib **56,57,** the ribs **56,57** comprise the flange clamp **51**. As the inflator mount **50** is pressed onto the inflator **80**, the discontinuous sleeve **52,53** and support ring **54,55** deform outwardly to allow the ribs **56,57** to slide over the inflator flange **84** to be seated over and adjacent the flange **84** and clamp the flange **84** against the support ring **54,55,** further securing the inflator mount **50** to the inflator **80**.

Referring to FIG. **13**, an inflator mount **186** similar to the inflator mount **50** of FIGS. **8** and **9** is shown unitary with a module housing **188** according to the present invention. The unitary module housing **188** and inflator mount **186** include a base plate **190** having a unitary annular bracket **191** with an inner edge **192** defining an opening **194** accommodating passage of an inflator flange. A housing sidewall **196** extends upwardly from an outer edge **197** of the base plate **190** and ends in a curled lip **198** defining an open top **200** of the module housing **188**. The unitary module housing **188** and inflator mount **186** has an inflator flange grip **202** extending downwardly and inwardly from the inner edge **192** of the annular bracket **191**. The inflator flange grip **202** comprises two discontinuous segments of a cylindrical sleeve **204a,204b** and a lower support ring **206a,206b**. In addition, the inflator mount **186** includes a flange clamp **208** comprising a radial rib **210a,210b** on each segment of the sleeve **204a,204b**. Fastener receiving holes **211** for mounting an airbag cushion are provided in the annular bracket **191**.

The inflator mounts adapt an inflator for mounting within an airbag module in a manner similar to that shown in FIG. **1** with respect to inflator mount **10**. The present invention, therefore, provides a simple, reliable and low cost method of attaching a separate inflator mount to a driver side airbag inflator that allows greater flexibility in the design of the inflator mount and inflator. The inflator mount secures to the inflator, mounts the inflator within an airbag module assembly, and prevents inflator rotation with respect to the inflator mount. The inflator mount also secures the inflator to the airbag module assembly to withstand the expansive forces during inflation of the airbag, and provides shake and rattle-free mounting.

The present invention also provides an inflator mount with a module housing that reduces the number of separate parts comprising the airbag module, and simplify assembly of the airbag module.

## Claims

1. An inflator mount (10) for attachment to an inflator (80) having a cylindrical sidewall (82) and a peripheral inflator flange (84) radially extending from the sidewall and for mounting the inflator within an airbag module (85), the inflator mount comprising:
a generally flat annular bracket (12) having an inside edge (13) defining an opening (14) accommodating passage of the radially extending peripheral inflator flange (84); and
an inflator flange grip extending downwardly and inwardly from the inside edge of the annular bracket, the inflator flange grip (16) slidingly receiving and grippingly engaging the inflator flange (84) and embracing the underside thereof, thereby securing the inflator mount to the inflator and adapting the inflator and inflator mount for mounting in an airbag module by means of the annular bracket.

2. An inflator mount according to claim 1 wherein the inflator flange grip (16) comprises a cylindrical sleeve (18) extending downwardly from the annular bracket (12) and frictionally and grippingly engaging the outer periphery of the inflator flange (84), and a lower support ring (20) extending inwardly from the cylindrical sleeve and embracing at least a portion of the underside of the flange.

3. An inflator mount according to claim 2 wherein the lower support ring (20) conforms to the inflator flange (84).

4. An inflator mount according to claim 3 wherein the annular bracket (12), the sleeve (18) and the support ring (20) are all continuous.

5. An inflator mount according to any one of claims 2 to 4 wherein the inflator flange grip (16) further includes a flange clamp (32) adapted to extend over at least a portion of the inflator flange (34) and clamp the inflator flange against the support ring (20).

6. An inflator mount according to claim 5 wherein the flange clamp (32) comprises a plurality of spaced-apart, resilient, snap tabs (34a, 34b, 34c) extending inwardly from the sleeve (18), the snap tabs being adapted to bend resiliently outward to slide over the inflator flange (84), and once over the flange, to bend resiliently back to extend inward over the flange to clamp the flange against the support ring (20).

7. An inflator mount (40) according to claim 5 wherein the flange clamp (41) comprises a plurality of spaced-apart dimples (42a, 42b) extending inwardly from the sleeve (18) and positioned to be received above the inflator flange (84).

8. An inflator mount (50) according to claim 5 wherein the cylindrical sleeve (52, 53) and support ring (54, 55) comprise at least two discontinuous segments and each sleeve segment has a continuous radial rib (56, 57) comprising the flange clamp (51), the segments deforming outwardly to receive the inflator flange.

9. An inflator mount (110) according to any preceding claim wherein the annular bracket (115) forms a unitary one-piece construction with an airbag module housing (112).

10. A module housing (112) for mounting and housing an inflator (80) having a cylindrical sidewall (82) and a peripheral inflator flange (84) radially extending from the sidewall as part of an airbag module, the unitary module housing and inflator mount comprising:
a base plate (87); and
an inflator mount (10, 30, 40, 50, 110, 154, 160) according to any preceding claim with its annular bracket (12) secured to the base plate.

11. A module housing according to claim 10 wherein the base plate (87) defines an inflator-receiving opening (90) accommodating passage of the inflator flange (84), and the annular bracket (12) of the inflator mount is secured to the base plate so that the opening defined by the annular bracket is positioned with respect to the inflator-receiving opening of the base plate so that an inflator (80) extending through the opening (14) of the annular bracket can extend through the inflator-receiving opening of the base plate.

12. A module housing according to claim 10 or claim 11 wherein the annular bracket (12) of the inflator mount is unitary with the base plate (87).
